(19) Europäisches Patentamt / European Patent Office / Office européen des brevets

(11) **EP 2 567 086 B1**

(12) **FASCICULE DE BREVET EUROPEEN**

(45) Date de publication et mention
de la délivrance du brevet:
**17.06.2020 Bulletin 2020/25**

(21) Numéro de dépôt: **11730374.3**

(22) Date de dépôt: **14.04.2011**

(51) Int Cl.:
*F02D 41/24* *(2006.01)*   *F02D 41/00* *(2006.01)*
*F02D 41/18* *(2006.01)*   *F01L 1/20* *(2006.01)*
*F02B 77/08* *(2006.01)*

(86) Numéro de dépôt international:
**PCT/FR2011/050853**

(87) Numéro de publication internationale:
**WO 2011/138535 (10.11.2011 Gazette 2011/45)**

(54) **PROCEDE D'ESTIMATION D'UNE QUANTITE D'AIR FRAIS, SUPPORT D'ENREGISTREMENT ET ESTIMATEUR POUR CE PROCEDE, VEHICULE EQUIPE DE CET ESTIMATEUR**

VERFAHREN ZUR SCHÄTZUNG EINER FRISCHLUFTMENGE, AUFZEICHNUNGSMEDIUM UND KALKULATOR FÜR DIESES VERFAHREN UND MIT DIESEM KALKULATOR AUSGERÜSTETES FAHRZEUG

METHOD FOR ESTIMATING AN AMOUNT OF FRESH AIR, RECORDING MEDIUM AND ESTIMATOR FOR SAID METHOD, AND VEHICLE PROVIDED WITH SAID ESTIMATOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.05.2010 FR 1053602**

(43) Date de publication de la demande:
**13.03.2013 Bulletin 2013/11**

(73) Titulaire: **PSA Automobiles SA
78300 Poissy (FR)**

(72) Inventeur: **TRELLE, Frédéric
93150 Le Blanc Mesnil (FR)**

(56) Documents cités:
**EP-A2- 2 037 107    US-A1- 2003 075 158**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne un procédé d'estimation et un estimateur d'une quantité d'air frais admise à l'intérieur d'une chambre de combustion d'un cylindre d'un moteur lors d'un cycle moteur. L'invention concerne également un support d'enregistrement d'informations et un estimateur pour la mise en œuvre de ce procédé ainsi qu'un véhicule équipé de cet estimateur.

Un cycle moteur comprend successivement l'échappement des gaz brulés de la chambre de combustion, l'admission d'air frais et de carburant dans la chambre de combustion et l'explosion du mélange dans cette chambre de combustion. Dans le cas d'un moteur quatre temps, un cycle moteur correspond à deux allers-retours de piston dans le cylindre entre les deux positions extrêmes de sa course, c'est-à-dire le point mort haut (PMH) et le point mort bas (PMB).

L'échappement de gaz brûlés dure tant que la ou les soupapes d'échappement sont ouvertes. De façon similaire, l'admission d'air frais dure tant que la ou les soupapes d'admission sont ouvertes.

Comme cela est connu, la puissance délivrée par un moteur à combustion interne est fonction de la quantité d'air introduite dans la chambre de combustion de ce moteur. Cette quantité d'air est elle-même proportionnelle à la densité de cet air. De ce fait, en cas de demande de forte puissance, il est prévu d'augmenter cette quantité d'air aux moyens d'une compression de l'air avant qu'il ne soit admis dans cette chambre de combustion. Cette opération est plus communément appelée suralimentation et peut être réalisée par un dispositif de suralimentation comme un turbocompresseur ou un compresseur entraîné tel qu'un compresseur à vis.

Afin d'augmenter encore plus cette quantité d'air admise dans le cylindre, il peut être prévu de réaliser un mode d'admission avec un balayage des gaz brûlés résiduels. Ce balayage permet d'évacuer les gaz brûlés présents dans la chambre de combustion pour les remplacer par de l'air suralimenté.

Comme cela est expliqué dans le brevet US 4 217 866, ce balayage est obtenu en ouvrant simultanément les soupapes d'échappement et d'admission d'une même chambre de combustion pendant quelques degrés à quelques dizaines de degrés d'angle de rotation du vilebrequin. Typiquement, cela se produit en fin d'échappement des gaz brûlés et en début d'admission de l'air frais. Concrètement, le fait que la pression de l'air au niveau de la soupape d'admission ouverte est plus élevée que la pression au niveau de la soupape d'échappement crée un courant d'air qui passe directement de l'admission à l'échappement entraînant au passage une partie des gaz brûlés résiduels présents dans la chambre de combustion. Cette période pendant laquelle les soupapes d'admission et d'échappement sont simultanément ouvertes s'appelle « croisement de soupapes».

Dans le cas des moteurs atmosphériques, c'est-à-dire des moteurs dépourvus de suralimentation, un croisement de soupapes peut également être prévu. Dans ce cas, pendant le croisement de soupapes, de l'air frais et des gaz brûlés sont aspirés dans la chambre de combustion. On dit que les gaz brûlés sont ré-aspirés. Cette fonctionnalité est connue sous l'acronyme d'IGR (Internai Gaz Recirculation) ou Recirculation Interne de Gaz d'échappement.

Des procédés d'estimation du débit d'air frais admis à l'intérieur d'une chambre de combustion d'un cylindre d'un moteur sont connus. Par exemple, des procédés estiment la quantité d'air frais admise à l'intérieur d'une chambre de combustion d'un cylindre d'un moteur lors d'un cycle moteur. Cette estimation est réalisée à partir d'un modèle paramétré avec des angles d'ouverture et de fermeture des soupapes d'admission et d'échappement.

Les angles d'ouverture et de fermeture d'une soupape correspondent, aux instants dans le cycle moteur où la soupape, respectivement, s'ouvre et se ferme.

Ces procédés comportent la calibration du modèle à une température nominale de fonctionnement du moteur, cette calibration consistant en outre à régler la valeur des angles d'ouverture et de fermeture.

Par exemple, le document EP2037107 divulgue un procédé d'estimation d'une quantité d'air frais admise à l'intérieur d'une chambre de combustion à partir d'un modèle paramétré avec des angles d'ouverture et de fermeture de soupapes d'admission et d'échappement, ce procédé comportant la calibration du modèle à une température nominale de fonctionnement du moteur, et dans lequel, lors du fonctionnement du moteur à une température différente de la température nominale, le procédé comporte une correction de la quantité d'air admise en fonction de la température.

Typiquement, la température nominale est la température à laquelle fonctionne le moteur lorsqu'il est chaud. Ici, on considère que le moteur est chaud si la température du liquide de refroidissement de ce moteur est de 90 °C.

Toutefois, l'erreur d'estimation de la quantité d'air augmente quand le moteur ne fonctionne pas à sa température nominale et, en particulier, lors du démarrage à froid du moteur.

L'invention vise à remédier à cet inconvénient en proposant un procédé plus précis permettant d'estimer la quantité d'air frais admise à l'intérieur d'une chambre de combustion.

Elle a donc pour objet un procédé d'estimation d'une quantité d'air frais admise à l'intérieur d'une chambre de combustion d'un cylindre d'un moteur lors d'un cycle moteur selon la revendication 1 et dans lequel, lors du fonctionnement du moteur à une température différente de la température nominale, le procédé comporte la correction des angles d'ouverture et de fermeture réglés en fonction d'une estimation des jeux de distribution entre les soupapes et leurs culbuteurs ou entre les soupapes et la came de l'arbre à cames. L'estimation des jeux de distribution est réalisée à partir d'une grandeur physique représentative de la température du moteur et du temps écoulé depuis le démarrage du moteur.

Le procédé ci-dessus permet de limiter l'erreur d'estimation de la quantité d'air frais lorsque le moteur ne fonctionne pas à sa température nominale car les angles d'ouverture et de fermeture des soupapes sont corrigés pour tenir compte d'une valeur différente des jeux de distribution.

Les modes de réalisation de ce procédé d'estimation peuvent comporter une ou plusieurs des caractéristiques suivantes :

- la correction consiste à soustraire un offset constant à l'angle d'ouverture ou de fermeture de la soupape admission et échappement ;

- la correction comporte :

  i. la conversion de chaque jeu de distribution estimé en un angle correctif à l'aide d'une cartographie prédéterminée, et

  ii. l'ajout ou la soustraction de l'angle correctif à au moins l'un des angles d'ouverture et de fermeture réglés lors de la phase de calibration ;

- le procédé comprend une étape d'estimation d'une masse Ma d'air frais admise à l'intérieur de la chambre de combustion du cylindre du moteur lors d'un cycle moteur, cette étape comprenant :

  iii. l'estimation d'une masse totale Mtot de gaz contenue dans la chambre de combustion à la fin de l'admission de l'air frais,

  iv. l'estimation d'une masse Mb de gaz brûlés contenue dans la chambre de combustion à la fin de l'échappement des gaz brûlés, et

  v. l'estimation de la masse Ma d'air frais à partir de la différence entre la masse totale Mtot et la masse Mb de gaz brûlés estimées ;

- la correction consiste également à ajouter ou à soustraire un offset constant à l'angle d'ouverture ou de fermeture réglé pendant la phase de calibration;

- le procédé comporte la mesure de la température du liquide de refroidissement du moteur au moment du démarrage du moteur, cette mesure constituant la grandeur représentative de la température du moteur.

Ces modes de réalisation de ce procédé présentent en outre les avantages suivants :

i. l'estimation de la masse totale Mtot et de la masse Mb de gaz brulés peuvent être établies précisément sans mesurer la pression ou la température à l'intérieur de la chambre de combustion ce qui permet d'obtenir une estimation plus précise de la masse Ma;

ii. la soustraction ou l'ajout d'un offset prédéterminé à l'angle d'ouverture ou de fermeture mesuré lors de la phase de calibration permet de se rapprocher précisément de la valeur exacte où la soupape s'ouvre ou se ferme.

L'invention a également pour objet un support d'enregistrement d'informations selon la revendication 6.

L'invention a également pour objet un estimateur d'une quantité d'air frais admise à l'intérieur d'une chambre de combustion d'un cylindre d'un moteur lors d'un cycle moteur selon la revendication 7.

Enfin, l'invention a également pour objet un véhicule comportant l'estimateur ci-dessus.

L'invention sera mieux comprise à la lecture de la description qui va suivre, donnée uniquement à titre d'exemple non limitatif et faite en se référant aux dessins sur lesquels :

- la figure 1 est une illustration schématique d'un véhicule dans lequel la masse Ma et le remplissage total *rempl_tot* sont estimés ;

- la figure 2 est une illustration schématique d'un jeu de distribution du véhicule de la figure 1,

- la figure 3 est un graphe illustrant schématiquement des déplacements des soupapes d'échappement et d'admission lors d'un cycle moteur,

- la figure 4 est une illustration plus détaillée de l'architecture d'un calculateur électronique implémentant un estimateur de la masse Ma et du remplissage total *rempl_tot*,

- la figure 5 est un graphe illustrant la loi de levée d'une soupape du véhicule de la figure 1,

- la figure 6 est un graphe illustrant une cartographie de conversion d'un jeu de distribution en un angle correctif, et

- la figure 7 est un organigramme d'un procédé d'estimation de la masse Ma et du remplissage total *rempl_tot* dans le véhicule de la figure 1.

Dans ces figures, les mêmes références sont utilisées pour désigner les mêmes éléments.

Dans la suite de cette description, les caractéristiques et fonctions bien connues de l'homme du métier ne sont pas décrites en détail.

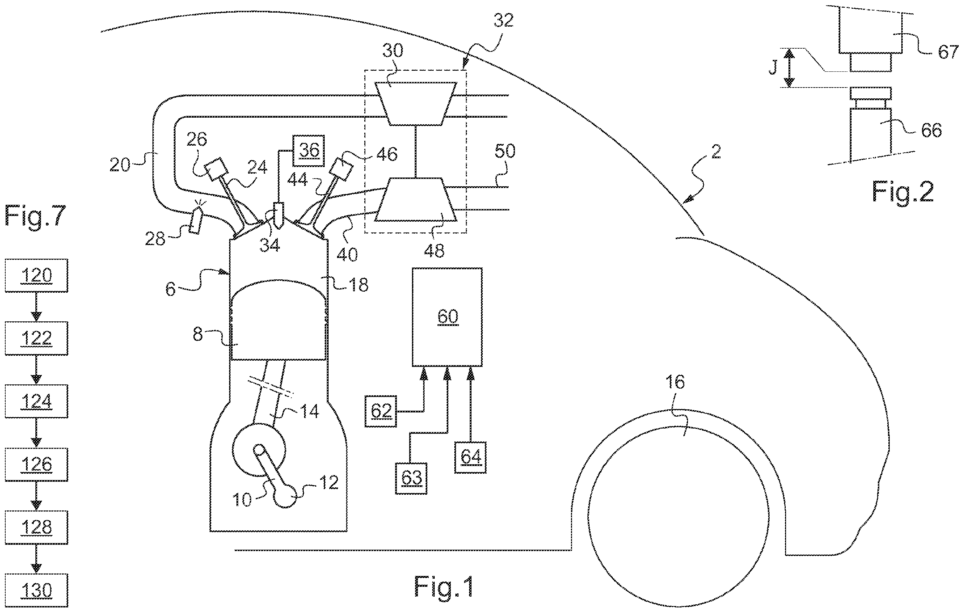

La figure 1 représente schématiquement un véhicule 2 équipé d'un moteur à combustion interne. Par exemple, le véhicule 2 est un véhicule automobile tel qu'une voiture.

Le moteur du véhicule 2 est équipé de plusieurs cylindres. Toutefois, pour simplifier l'illustration, seul un cylindre 6 de ce moteur à combustion est représenté sur la figure 1. A l'intérieur du cylindre 6, un piston 8 est monté déplaçable en translation entre un point mort haut (PMH) et un point mort bas (PMB). Ce piston 8 entraîne en rotation une manivelle 10 d'un vilebrequin 12 par l'intermédiaire d'une bielle 14. Le vilebrequin 12 entraîne en rotation, par l'intermédiaire d'un mécanisme non représenté, les roues motrices du véhicule 2 telles que la roue 16.

Le cylindre 6 définit une chambre 18 de combustion délimitée par la partie supérieure du piston 8 et une culasse non représentée. Un conduit 20 d'admission d'air frais débouche dans la chambre 18 par l'intermédiaire d'une ouverture d'admission. Une soupape 24 d'admission est déplaçable entre une position fermée dans laquelle elle ferme de façon étanche à l'air frais l'ouverture d'admission, et une position ouverte dans laquelle l'air frais peut être admis à l'intérieur de la chambre 18 par l'intermédiaire de l'ouverture d'admission. La soupape 24 est déplacée entre sa position ouverte et sa position fermée par un culbuteur 26 de soupapes d'admission.

Dans cette description, chaque culbuteur est déplacé par un arbre à cames. Le culbuteur peut être l'une des cames de cet arbre à cames. L'arbre à cames est alors appelé « arbre à cames en tête ». Le culbuteur peut aussi être déplacé par l'intermédiaire d'un levier d'actionnement lui-même déplacé par l'arbre à cames.

Dans le cas particulier représenté ici, un injecteur 28 de carburant est prévu dans le conduit 20 pour injecter du carburant dans l'air frais admis à l'intérieur de la chambre 18. Ainsi, le mélange air frais/carburant commence à se produire à l'intérieur du conduit d'air d'admission.

Le conduit 20 est fluidiquement raccordé à un compresseur 30 d'un turbocompresseur 32 propre à comprimer l'air frais admis à l'intérieur de la chambre 18. L'air frais ainsi comprimé est appelé air frais suralimenté.

Une bougie 34 propre à allumer le mélange air frais/carburant débouche dans la chambre 18. Cette bougie est commandée par un dispositif d'allumage 36.

Un conduit 40 d'échappement débouche également à l'intérieur de la chambre 18 par l'intermédiaire d'une ouverture d'échappement. Cette ouverture d'échappement est obturable par une soupape 44 déplaçable entre une position fermée dans laquelle elle ferme de façon étanche aux gaz brûlés l'ouverture d'échappement, et une position ouverte dans laquelle les gaz brûlés contenus à l'intérieur de la chambre 18 peuvent s'échapper par l'intermédiaire du conduit 40. Cette soupape 44 est déplacée entre ces positions ouverte et fermée par un culbuteur de soupapes 46.

L'extrémité du conduit 40 opposée à son ouverture qui débouche dans la chambre 18 est fluidiquement raccordée à une turbine 48 du turbocompresseur 32. Cette turbine 48 permet notamment de détendre les gaz d'échappement avant de les envoyer dans une ligne d'échappement 50.

Les différents équipements du moteur susceptibles d'être commandés tels que les actionneurs, le dispositif d'allumage ou encore l'injecteur de carburant sont raccordés à une unité 60 de commande du moteur également connu sous l'acronyme ECU (Engine Control Unit). Pour simplifier la figure 1, les connexions entre cette unité 60 et les différents équipements commandés n'ont pas été représentées.

L'unité 60 est également raccordée à de nombreux capteurs tels que par exemple un capteur 62 de la position du vilebrequin 12, un capteur 63 de la température du liquide de refroidissement du moteur, et un capteur 64 du régime moteur. On définit ici le régime moteur comme étant le nombre de tours par minute effectués par l'arbre d'entraînement du moteur.

La figure 2 représente plus en détail une extrémité 66 d'une soupape déplacée entre ses positions ouverte et fermée par un culbuteur 67. La figure 2 montre qu'il peut exister un jeu J entre la face du culbuteur 67 destinée à venir en appui sur une face correspondante de l'extrémité 66 pour déplacer la soupape. Ce jeu est connu sous le terme de « jeu de distribution ». Généralement, ce jeu varie d'une soupape à l'autre. Ici, ce jeu existe car le véhicule 2 est dépourvu de mécanisme de rattrapage de ce jeu J.

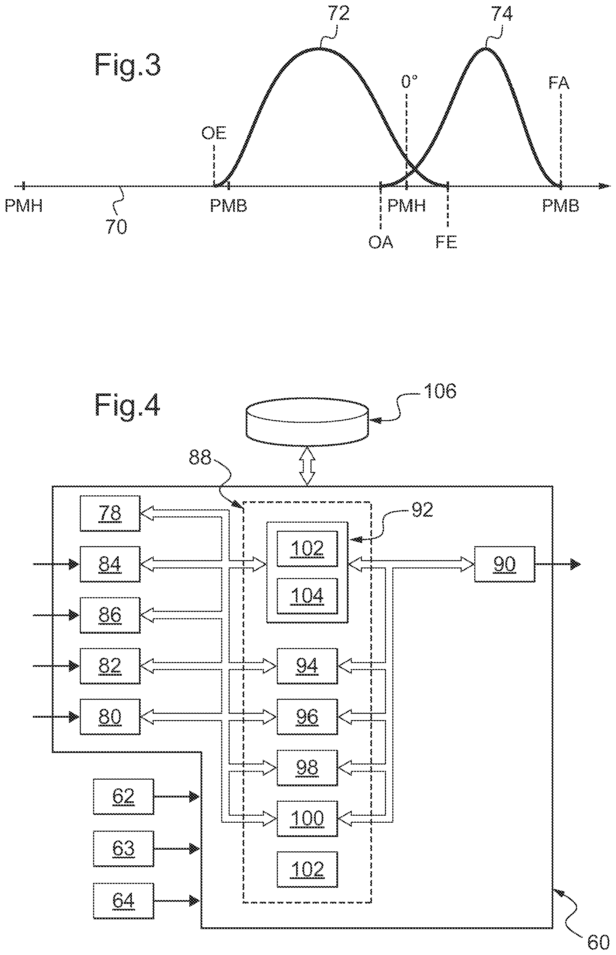

La figure 3 représente, sous la forme d'un graphe, les déplacements des soupapes 24 et 44 par rapport aux déplacements du piston 8 lors d'un cycle moteur. Sur ce graphe, un axe 70 des abscisses représente le déplacement du piston 8 entre son point mort haut et son point mort bas notés, respectivement, PMH et PMB sur ce graphe. L'axe des ordonnées représente l'amplitude du déplacement des soupapes d'admission et d'échappement. Cette amplitude est nulle lorsque l'ouverture d'admission ou l'ouverture d'échappement est fermée. Elle est maximale lorsque ces mêmes ouvertures sont complètement ouvertes. Ici, le déplacement de la soupape 44 est représenté par une courbe 72 et le déplacement de la soupape 24 est représenté par une courbe 74.

L'axe 70 est gradué en degrés d'angle de rotation du vilebrequin. L'origine de cet axe est confondue avec le point mort haut d'admission d'air frais.

Comme représenté sur cette figure 3, la soupape d'échappement commence à s'ouvrir à un angle OE situé sensiblement autour du point mort bas et se ferme à un angle FE. Dans le cas particulier représenté sur la figure 2, l'angle FE est situé après le point mort haut d'admission.

La soupape d'admission commence à s'ouvrir à un angle OA et se ferme à un angle FA.

Ici, ce graphe est représenté dans le cas particulier où un croisement de soupapes existe. En effet, l'angle OA précède l'angle FE, ce qui indique que pendant une période de temps de quelques degrés, les soupapes d'admission et d'échappement sont simultanément ouvertes.

La figure 4 représente plus en détail une architecture possible pour l'unité 60 pour estimer la masse Ma et le remplissage total *rempl_tot.*

A cet effet, l'unité 60 implémente :

- un estimateur 78 des jeux de distribution des soupapes d'admission et d'échappement du véhicule 2,
- un estimateur 80 d'une température $T_{ECH}$ des gaz brûlés qui traversent l'ouverture d'échappement,
- un estimateur 82 d'une pression $P_{ECH}$ des gaz qui traversent l'ouverture d'échappement pendant le croisement de soupapes,
- un estimateur 84 d'une température $T_{ADM}$ de l'air frais admis à l'intérieur de la chambre 18 par l'intermédiaire du conduit 20, et
- un estimateur 86 d'une pression $P_{ADM}$ de l'air frais admis à l'intérieur de la chambre 18.

Ces estimateurs 78, 80, 82, 84 et 86 sont raccordés à un estimateur 88 de la masse Ma et du remplissage total *rempl_tot.* Cet estimateur 88 est également raccordé à un bloc 90 de commandes du moteur. Ce bloc 90 permet notamment de commander les différents actionneurs, injecteurs et dispositifs d'allumage du moteur en fonction des estimations de la masse Ma et du remplissage total *rempl_tot.* Par exemple, le bloc 90 est apte à régler la quantité de carburant injectée et à avancer l'instant d'allumage du mélange air frais/carburant injecté dans la chambre 18 ou à régler l'ouverture d'une vanne papillon permettant d'ajuster la quantité d'air frais admise à l'intérieur de la chambre 18.

L'estimateur 88 comprend :

- un module 92 d'estimation d'une masse Mb de gaz brûlés contenue dans la chambre 18 à la fin de l'échappement des gaz brûlés,
- un estimateur 94 d'une masse Mbal de gaz balayés de l'admission vers l'échappement lors du croisement de soupapes,
- un estimateur 96 de la température Tb des gaz brulés,
- un estimateur 98 de la masse Ma d'air frais admis dans la chambre 18,
- un estimateur 100 du remplissage total *rempl_tot,* et
- un correcteur 102 des angles OE, OA, FE et FA en fonction des jeux de distribution estimés.

Le module 92 présente :

- un sous module 102 d'estimation d'une masse Mb_resi de gaz brûlés résiduels contenue dans la chambre 18 à la fin de l'échappement, et
- un sous module 104 d'estimation d'une masse Mb_reasp de gaz brûlés réaspirés lors du croisement de soupapes à l'intérieur de la chambre 18.

L'unité 60 est typiquement réalisée à partir d'un calculateur programmable apte à exécuter des instructions enregistrées dans un support d'enregistrement d'informations. Ici, à cet effet, l'unité 60 est raccordée à une mémoire 106 contenant les différentes instructions et données nécessaires pour l'exécution du procédé de la figure 7. En particulier, les différentes cartographies utilisées pour mettre en œuvre le procédé de la figure 7 sont enregistrées dans cette mémoire 106. Ces cartographies sont par exemple construites expérimentalement de manière à minimiser les erreurs entre les valeurs estimées et les valeurs réelles.

Avant de décrire plus en détail chacun des modules 92 à 102, le principe général d'un modèle qui fournit les estimations de la masse Ma et du remplissage total *rempl_tot* à partir des mesures des capteurs est d'abord décrit.

Ici, le principe général du modèle est basé sur un bilan des masses sur un cycle moteur des gaz entrant et sortant de la chambre 18. Ce bilan des masses est décomposé en plusieurs calculs qui ont lieu tout au long du cycle moteur.

Dans un premier temps, à la fin de l'échappement, la masse Mb de gaz brûlés dans la chambre 18 est estimée. Dans un second temps, à la fin de l'admission, la masse totale Mtot de gaz contenue à l'intérieur de la chambre 18 est estimée.

A partir de ces deux estimations, et parce que la masse total de gaz est préservée sur un cycle moteur, la masse Ma d'air contenue à l'intérieur de la chambre 18 lors d'un cycle moteur peut être obtenue par soustraction de la masse Mb à la masse Mtot.

Plus précisément, d'après le bilan des masses des gaz admis et évacués lors d'un cycle moteur, la masse Ma est donnée par la relation suivante :

$$Ma = Mtot - Mb$$

où :

- Mtot est la masse totale de gaz dans la chambre 18 à la fin de l'admission, et
- Mb est la masse totale de gaz brûlés dans la chambre 18 à la fin de l'échappement.

Dans le cas particulier où une partie des gaz brulés sont ré-aspirés lors du croisement de soupapes, l'estimation de la masse Mb se décompose en une estimation de la masse Mb_resi de gaz brûlés résiduels non évacuée par l'intermédiaire du conduit 40 à la fin de l'échappement et de la masse Mb_reasp de gaz brûlés ré-aspirée pendant le croisement de soupapes.

La masse de gaz brûlés Mb est alors définie par la relation suivante :

$$Mb = Mb\_resi + Mb\_reasp$$

où :

- Mb_resi est la masse de gaz brûlé résiduelle qui n'a pas pu être évacuée lors de l'échappement, et
- Mb_reasp est la masse de gaz brûlés ré-aspirée lors du croisement de soupapes.

Dans le cas particulier d'un moteur suralimenté avec croisement de soupapes, on cherche aussi à estimer le remplissage total *rempl_tot* en air frais suralimenté. Le remplissage total *rempl_tot* est la quantité totale d'air frais admise par l'intermédiaire de l'ouverture d'admission lors d'un cycle moteur. Dans le cas d'un moteur suralimenté avec croisement de soupapes, une partie de l'air frais admis par l'intermédiaire de l'ouverture d'admission est immédiatement évacuée par l'échappement (Mbal). Ainsi, le remplissage total *rempl_tot* est, en première approximation, donné par la relation suivante :

$$rempl\_tot = rempl\_cyl + \frac{Mbal}{Mo}$$

où :

- *rempl_tot* est le remplissage total en air frais total,
- rempl_cyl est le remplissage en air frais de la chambre 18,
- Mbal est la masse des gaz balayés de l'admission vers l'échappement pendant le croisement de soupapes, et
- Mo est une masse de référence d'air mesurée dans les conditions normales de températures et de pression.

Le remplissage en air frais rempl_cyl est défini par la relation suivante :

$$rempl\_cyl = \frac{Ma}{Mo}$$

où :

- Ma est la masse d'air contenu dans la chambre 18 à la fin de l'admission, et
- Mo est la masse de référence.

Ici, les conditions normales de température et de pression correspondent à une température de 298,15 K, à une pression de 1013 mbar, et à un volume égal au volume d'un cylindre.

Les grandeurs *rempl_tot,* rempl_cyl et le rapport Mbal/Mo sont des grandeurs sans dimension.

Généralement, la masse Mb_reasp n'existe que dans le cas des moteurs atmosphériques. A l'inverse, la masse Mbal n'existe que dans le cas des moteurs suralimentés. Toutefois, la description du modèle qui suit est faite dans le cas le plus complet, c'est-à-dire le cas où les estimations des masses Mb_reasp et Mbal sont toutes les deux réalisées. En effet, l'homme du métier peut aisément simplifier le modèle qui suit pour l'adapter uniquement au cas des moteurs atmosphériques ou uniquement au cas des moteurs suralimentés.

Les différentes équations du modèle et les différents modules 92 à 100 utilisés ici sont maintenant décrits en détail.

Le sous-module 102 estime la masse Mb_resi à l'aide de la relation suivante :

$$Mb\_resi = \frac{P_{cyl\_FE} \times V_{cyl\_FE}}{r \times T_{ECH}} = \frac{\left(A_{ECH} \times P_{ECH}\right) \times V_{cyl\_FE}}{r \times T_{ECH}}$$

où :

- $P_{cyl\_FE}$ est la pression à l'intérieur de la chambre 18,
- $P_{ECH}$ est la pression des gaz brûlés qui traverse l'ouverture d'échappement lors du croisement des soupapes,
- $T_{ECH}$ est la température des gaz brûlés évacués par l'intermédiaire du conduit 40,
- r est une constante égale au rapport suivant R/M où R est la constante universelle des gaz parfaits et M est la masse molaire en g.mol$^{-1}$ des gaz brûlés,
- $A_{ECH}$ est un coefficient correcteur permettant de corriger la pression $P_{ECH}$ pour obtenir une pression proche de $P_{cyl\_FE}$, dont la valeur est donnée par une cartographie en fonction de l'angle FE et du régime moteur, et
- $V_{cyl\_FE}$ est le volume géométrique de la chambre 18 à la fin de l'échappement c'est-à-dire pour l'angle FE.

Le volume $V_{cyl\_FE}$ est donné par la relation suivante :

$$V_{cyl\_FE}(FE) = \frac{Cu}{\varepsilon - 1} + \frac{Cu}{2}\left(1 + \lambda - \cos(FE) - \sqrt{\lambda^2 - \sin^2(FE)}\right)$$

où :

- A est le rapport bielle/manivelle,
- *Cu* est la cylindrée unitaire du cylindre 6, et
- $\varepsilon$ est le taux de compression du moteur.

Le rapport $\lambda$ et le taux $\varepsilon$ sont des caractéristiques connues d'un moteur. On rappelle simplement ici que le rapport A est le rapport entre la longueur de la bielle 14 divisée par la demi-longueur de la manivelle 18.

Dans la relation ci-dessus et dans les relations suivantes, les pressions $P_{ECH}$ et $P_{ADM}$ et les températures $T_{ECH}$ et $T_{ADM}$ sont les pressions et températures estimées par les estimateurs 80, 82, 84 et 86 à partir de grandeurs physiques mesurées dans le moteur.

Le sous-module 104 estime la masse Mb_reasp de gaz brûlés réaspirés lors du croisement de soupapes. Ici, cette estimation est donnée par la relation suivante :

$$Mb\_reasp = \overset{\bullet}{Mb\_reasp}/K$$

où :

- *Mb_reasp* est le débit de gaz brûlés ré-aspirés exprimé en kg/h, et
- K est un coefficient permettant de passer du débit à une masse admise par cycle moteur dans la chambre 18.

Par exemple, le coefficient K est donné par la relation suivante :

$$K = N \times \frac{Nbre\_cylindre}{Nbre\_revolution\_cycle} \times 60$$

où :

- N est le régime moteur
- « Nbre_cylindre » est le nombre de cylindre du moteur,
- « Nbre_revolution_cycle » est le nombre de révolution du vilebrequin lors d'un cycle du moteur, et
- « 60 » permet de convertir le régime moteur N donné en tour par minute en nombre de tours par heure.

Par exemple, pour un moteur quatre temps équipé de quatre cylindres, le coefficient K est égal à K = N x 2 x 60.

Le débit de gaz brûlés ré-aspirés *Mb_reasp* est calculé à partir de la loi de Barré Saint Venant corrigée de la façon suivante pendant le croisement de soupapes :

$$\overset{\bullet}{Mb\_reasp} = \frac{P_{ECH}}{\sqrt{r \times T_{ECH}}} \times \left[ Sbase + Scor \times \left( \Gamma\left(\frac{P_{ADM}}{P_{ECH}}\right) - \Gamma_0\left(\frac{P_{ADM}}{P_{ECH}}\right) \right) \right] \times POND$$

où :

- $P_{ECH}$ est la pression des gaz brûlés traversant l'ouverture d'échappement,
- $P_{ADM}$ est la pression de l'air frais admis par l'intermédiaire du conduit 20,
- $T_{ECH}$ est la température des gaz brulés admis dans la chambre 18,
- Sbase est une cartographie prédéterminée qui donne une première valeur corrective en fonction de la différence entre les angles FE et OA et du régime moteur,
- Scor est une cartographie prédéterminée qui donne une seconde valeur corrective en fonction de la différence entre les angles FE et OA et du régime moteur,
- POND est une cartographie prédéterminée qui donne une troisième valeur corrective en fonction de la position du croisement de soupapes et du régime moteur.

La position du croisement de soupapes est donné par la relation suivante (FE + OA) / 2.

$\Gamma(P_{ADM}/P_{ECH})$ est défini par la relation suivante :

$$\text{Si} \quad \frac{P_{ADM}}{P_{ECH}} > \left(\frac{2}{\gamma+1}\right)^{\frac{\gamma}{\gamma-1}} \Rightarrow \Gamma\left(\frac{P_{ADM}}{P_{ECH}}\right) = \sqrt{\frac{2 \times \gamma}{\gamma-1} \times \left[\left(\frac{P_{ADM}}{P_{ECH}}\right)^{\frac{2}{\gamma}} - \left(\frac{P_{ADM}}{P_{ECH}}\right)^{\frac{\gamma+1}{\gamma}}\right]}$$

$$\text{Si} \quad \frac{P_{ADM}}{P_{ECH}} < \left(\frac{2}{\gamma+1}\right)^{\frac{\gamma}{\gamma-1}} \Rightarrow \Gamma\left(\frac{P_{ADM}}{P_{ECH}}\right) = \sqrt{\gamma \times \left(\frac{2}{\gamma+1}\right)^{\frac{\gamma+1}{\gamma-1}}}$$

où $\gamma$ est le rapport de la capacité calorifique à pression constante des gaz brulés sur la capacité calorifique à volume constant des gaz brulés. Par exemple, ce rapport est égal à 1,4.

L'équation ci-dessus distingue le cas d'un écoulement subsonique d'un écoulement sonique.

$F_0(P_{ADM}/P_{ECH})$ est défini par la relation suivante :

$$\Gamma_0\left(\frac{P_{ADM}}{P_{ECH}}\right) = \sqrt{\gamma \times \left(\frac{2}{\gamma+1}\right)^{\frac{\gamma+1}{\gamma-1}}}$$

Le module 94 estime la masse totale Mbal_tot de gaz balayés entre l'admission et l'échappement pendant le croisement de soupapes.

La masse Mbal_tot est obtenue à l'aide de la relation suivante :

$$Mbal\_tot = \dot{Mbal\_tot} / K$$

où :

- $\dot{Mbal\_tot}$ est le débit de gaz balayés de l'admission vers l'échappement pendant le croisement de soupapes exprimé en kg/h, et
- K est le même coefficient que précédemment défini pour passer du débit à une masse admise par cycle moteur dans la chambre 18.

Le débit $\dot{Mbal\_tot}$ est estimé à partir de la loi de Barré Saint Venant corrigée de la façon suivante pour tenir compte des croisements de soupapes :

$$\dot{Mbal\_tot} = \frac{P_{ADM} \times S}{\sqrt{r \times T_{ADM}}} \times \Gamma\left(\frac{P_{ECH}}{P_{ADM}}\right) \times POND$$

- $P_{ECH}$ et $P_{ADM}$ ont déjà été définis précédemment
- $T_{ADM}$ est la température de l'air admis dans la chambre 18
- S est une cartographie prédéterminée permettant d'obtenir une valeur corrective en fonction de la différence entre les angles FE et OA et du régime moteur, et
- POND est une cartographie prédéterminée permettant d'obtenir une valeur corrective en fonction de la position du croisement de soupapes et du régime moteur.

Le ratio $\Gamma(P_{ECH}/P_{ADM})$ a déjà été défini ci-dessus.

La position du croisement de soupapes est égale à la valeur suivante : (FE + OA) / 2.

Le module 96 estime la température Tb des gaz brûlés. Pour cela, cette température Tb est obtenue par un calcul de mélange enthalpique entre les gaz résiduels et les gaz brûlés ré-aspirés. Par exemple, la température Tb est obtenue à partir de la relation suivante :

$$Tb = \frac{Mb\_reasp \times cpb\_reasp \times Tb\_reasp + Mb\_resi \times cpb\_resi \times Tb\_resi}{Mb\_reasp \times cpb\_reasp + Mb\_resi \times cpb\_resi}$$

où :

- Mb_resi est la masse de gaz brûlés résiduels précédemment estimée,
- Mb_reasp est la masse de gaz brûlés ré-aspirés lors du croisement de soupapes,
- cpb_resi est la capacité calorifique massique à pression constante des gaz brûlés résiduels,
- cpb_reasp est la capacité calorifique massique à pression constante des gaz brûlés réaspirés,

- Tb_reasp est la température des gaz brûlés réaspirés lors du croisement de soupape, et
- Tb_resi est la température des gaz brûlés résiduels obtenue à partir d'un calcul de détente adiabatique.

Pour simplifier, par exemple, les capacités cpb_resi et cpb_reasp sont prises égales.

La température Tb_reasp est prise égale à la température $T_{ECH}$.

La température Tb_resi est calculée à partir de la relation suivante :

$$Tb\_resi = T_{ECH} \times \left[ \frac{1}{\gamma} + \left( \frac{\gamma - 1}{\gamma} \right) \times \frac{P_{ADM}}{P_{ECH}} \right]$$

où toutes les variables ont déjà précédemment été définies.

Le module 98 estime la masse Ma en résolvant le système d'équations suivant :

$$\begin{cases} Ma = Mtot - Mb \\[2ex] Mtot = \dfrac{(A_{ADM} \times P_{ADM}) \times V_{cyl\_FA}}{(r \times T_{melange})^n} \\[2ex] T_{mélange} = \dfrac{Ma \times cpa \times Ta + Mb \times cpb \times Tb}{Ma \times cpa + Mb \times cpb} \end{cases}$$

où :

- $P_{ADM}$, Mb, Ma ont déjà été définis précédemment,
- $V_{cyl\_FA}$ est le volume géométrique de la chambre 18 calculé à l'angle FA,
- $A_{ADM}$ est un coefficient correcteur,
- r est une constante égale au rapport suivant R/M où R est la constante universelle des gaz parfaits et M est la masse molaire en g.mol$^{-1}$ des gaz mélangés,
- $T_{mélange}$ est la température du mélange d'air frais et de gaz brûlés contenu dans la chambre 18, et
- l'exposant « n » est choisi égal à 1,
- cpa et cpb sont les capacités calorifiques massiques à pression constante, respectivement, de l'air frais et des gaz brulés, et
- Ta et Tb sont les températures, respectivement, de l'air frais et des gaz brulés.

Le volume $V_{cyl\_FA}$ est calculé à l'aide de la relation suivante :

$$V_{cyl\_FA}(FA) = \frac{Cu}{\varepsilon - 1} + \frac{Cu}{2}\left( 1 + \lambda - \cos(FA) - \sqrt{\lambda^2 - \sin^2(FA)} \right)$$

Le coefficient correcteur $A_{ADM}$ est obtenu à l'aide de la relation suivante :

$$A_{ADM} = A_{ADM\_ATMO} + k_{ATMO\_TURBO} \times \left( A_{ADM\_TURBO} - A_{ADM\_ATMO} \right)$$

où :

- $A_{ADM\_ATMO}$ est une valeur corrective obtenue à partir d'une cartographie prédéterminée en fonction de l'angle FA et du régime moteur,
- $A_{ADM\_TURBO}$ est une valeur corrective obtenue à partir d'une cartographie prédéterminée en fonction de l'ange FA et du régime moteur,

- Le coefficient $k_{ATMO\_TURBO}$ est un coefficient correcteur donné par la relation suivante :

$$k_{ATMO\_TURBO} = \max\left(0\;;\;\min\left(1\;;\;\frac{P_{ADM} - f_A(N, FA) \times \dfrac{P_{ATMO}}{Po}}{f_B(N) \times \dfrac{P_{ATMO}}{Po}}\right)\right)$$

où :

- $P_{ATMO}$ est la pression atmosphérique,
- Po est la pression de référence aux conditions normales de température et de pression, c'est-à-dire 1013 mbar,
- $f_A(N, FA)$ est une valeur corrective obtenue à partir d'une cartographie prédéterminée en fonction du régime moteur et de l'angle FA, et
- $f_B(N)$ est valeur corrective obtenue à partir d'une cartographie prédéterminée en fonction du régime moteur.

La relation définissant la température $T_{mélange}$ est obtenue par un calcul de mélange enthalpique entre la masse de gaz brûlés et la masse d'air frais contenues dans la chambre 18.

Le système d'équations décrit ci-dessus est un système d'équation à trois inconnus et à trois équations. La résolution de ce système permet d'obtenir des estimations de la masse Ma, de la température $T_{mélange}$ et de la masse totale Mtot.

Plus précisément, l'estimation de la masse Ma est donnée par la relation suivante dans le cas particulier où cpb et cpa sont égaux et n est égal à un :

$$Ma = \frac{1}{Ta} \times \left(\frac{(A_{ADM} \times P_{ADM}) \times V_{cyl\_FA}}{r} - Mb \times Tb\right)$$

Eventuellement, l'estimation de la masse Ma obtenue après avoir résolu le système d'équations est corrigée en fonction de l'inverse de la température Ta de l'air frais. Par exemple, la masse Ma est corrigée à l'aide de la relation suivante :

$$Ma = f\left(\frac{1}{Ta}\right)Ma$$

où :

- $f(1/Ta)$ est un coefficient correcteur dont la valeur est obtenue à partir d'une cartographie préenregistrée donnant la valeur de ce coefficient correcteur en fonction de l'inverse de la température Ta.

Le module 100 estime le remplissage total *rempl_tot* en air frais. Ce remplissage total *rempl_tot* est par exemple obtenu à l'aide de la relation suivante :

$$rempl\_tot = \frac{Mtot}{Mo} - \max\left(0\;;\;\frac{Mb}{Mo} - \frac{Mbal\_tot}{Mo}\right) + \left|\min\left(0\;;\;\frac{Mb}{Mo} - \frac{Mbal\_tot}{Mo}\right)\right|$$

où :

- l'ensemble des variables de cette relation ont déjà été définis précédemment,
- Max(...) et Min(...) sont respectivement les fonctions retournant le maximum et le minimum, et
- |...| est la valeur absolue.

Pour obtenir cette dernière relation, on a considéré que le gaz balayé de l'admission vers l'échappement pendant le croisement de soupapes remplissait d'abord entièrement le volume de la chambre 18 avant de passer ensuite directement de l'admission vers l'échappement. Ainsi, tant que la masse Mbal_tot de gaz balayés est inférieure à la masse Mb de gaz brulés, on considère qu'il n'y a pas de balayage. A l'inverse, dès que la masse Mbal_tot est supérieure à la masse Mb de gaz brulés, on considère qu'il n'y a plus que du balayage de gaz entre l'admission et l'échappement. La masse Mbal définie au début de cette description correspond uniquement au dernier terme de la relation ci-dessus.

Le modèle décrit précédemment en regard des modules 92 à 100 fait intervenir de nombreux paramètres en plus des grandeurs physiques estimées par les estimateurs 80 à 84. Ces paramètres sont par exemple les coefficients $A_{ECH}$, $\lambda$, Cu, $\varepsilon$... etc. Les valeurs de ces paramètres sont réglées lors d'une phase de calibration. Par exemple, ces valeurs sont mesurées ou estimées pour minimiser l'erreur d'estimation de la masse Ma et du remplissage total *Rempl_tot.*

L'erreur d'estimation est l'erreur entre la valeur estimée par le modèle et la valeur réellement observée. Par exemple, lors de la phase de calibration, les différentes valeurs des paramètres sont mesurées sur un banc d'essai comprenant le moteur à calibrer.

Lors de cette phase, les paramètres sont réglés pour une température $T_n$ nominale de fonctionnement du moteur du véhicule 2. Ici, cette température $T_n$ correspond à la température du moteur lorsque celui-ci est chaud. Cette température $T_n$ est égale à 90 °C.

Une fois réglée sur le banc de test, les valeurs de ces paramètres sont implémentées en tant que constante dans les modules 92 à 100. Par exemple, elles ne sont plus modifiées pendant toute la durée de vie du moteur du véhicule 2.

Parmi les différents paramètres, la valeur des angles OE, OA, FE et FA est particulièrement importante pour obtenir une bonne estimation de la quantité d'air frais admise dans les cylindres.

La valeur de ces angles OE, OA, FE et FA dépend du jeu de distribution J qui existe entre chaque soupape et son culbuteur. Hors le jeu de distribution J varie lors du fonctionnement du moteur. Par exemple, le jeu J varie en fonction de la température du moteur à cause de phénomènes de dilatation thermique des soupapes. Aussi, plus la température du moteur est éloignée de la température $T_n$ à laquelle le modèle a été calibré, plus l'erreur d'estimation est importante. Ce problème est particulièrement critique dans les quelques secondes qui suivent le démarrage du moteur à froid, c'est-à-dire pendant un intervalle de temps inférieur à 3, 5 ou 10 secondes après le démarrage à froid. En effet, pendant cet intervalle de temps, la température des soupapes est très éloignée de la température qu'elles avaient pendant la phase de calibration et le jeu est bien plus grand que celui mesuré ou estimé lors du fonctionnement du moteur à la température $T_n$.

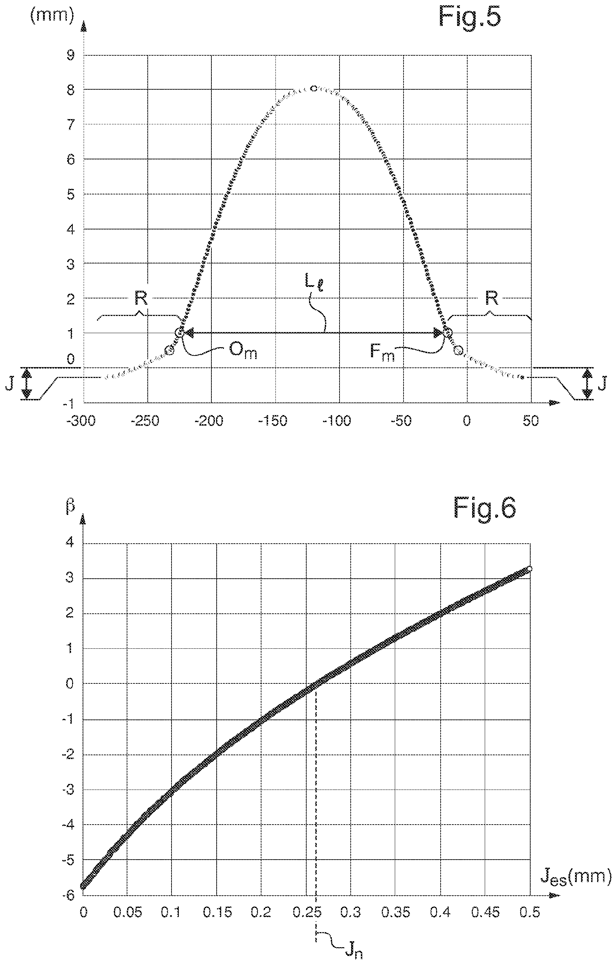

La relation entre le jeu J et les angles d'ouverture et de fermeture d'une soupape est illustrée sur la figure 5. Plus précisément, la figure 5 représente la loi de levée d'une soupape. L'axe des abscisses représente la position angulaire du vilebrequin exprimée en degré. L'axe des ordonnées représente la hauteur de levée de la soupape exprimée en millimètres. La hauteur de levée est nulle lorsque la soupape est fermée et augmente au fur et à mesure que la soupape s'ouvre. Cette hauteur représente la distance qui sépare la soupape de l'ouverture qu'elle obture.

Sur la figure 5, un jeu J de distribution non nul a été représenté. La conséquence de l'existence de ce jeu J est qu'il doit être rattrapé avant que la soupape ne s'ouvre. Par conséquent, cela modifie l'angle d'ouverture et également l'angle de fermeture de la soupape. En effet, la distance $L_l$ qui sépare les angles d'ouverture et de fermeture est quant à elle constante.

Les extrémités de la loi de levée se terminent par des zones où la hauteur de levée progresse très faiblement en fonction de l'angle du vilebrequin. Ces zones sont appelées rampes R. Ces rampes sont donc très plates. La dérivée de la loi de levée dans les zones correspondantes aux rampes R est donc faible. A l'inverse, dès que l'on sort de ces zones correspondant aux rampes R, la dérivée de la loi de levée est bien supérieure et, par exemple ici, au moins deux fois supérieure.

A cause de ces rampes R, une mesure précise des angles d'ouverture et de fermeture est rendue difficile. L'estimateur 78 et le correcteur 102 ont pour fonction de remédier à ces problèmes d'imprécision sur les angles OE, OA, FE et FA.

L'estimateur 78 estime le jeu J entre chaque soupape et son culbuteur. Par exemple, ici, le jeu estimé $J_{es}$ est obtenu à partir de la température mesurée du liquide de refroidissement lors du démarrage du moteur et du temps écoulé $t_s$ depuis le démarrage du moteur du véhicule 2. L'estimateur 78 utilise également une cartographie préenregistrée, par exemple dans la mémoire 106. Cette cartographie préenregistrée permet d'associer à chaque température et temps écoulé $t_s$ un jeu estimée $J_{es}$. Typiquement, cette cartographie est construite lors de la phase de calibration pour chaque soupape.

Le correcteur 102 corrige chaque angle OE, OA, FE ou FA en fonction du jeu correspondant $J_{es}$ estimé par l'estimateur 78. Par exemple, ici, le correcteur 102 ajoute ou soustrait un angle correctif $\beta$ à un angle d'ouverture $O_m$ mesuré pendant la phase de calibration. L'angle correctif $\beta$ est par exemple donné par une cartographie prédéterminée qui permet d'associer à chaque estimation $J_{es}$ une valeur de l'angle $\beta$. Cette cartographie est par exemple enregistrée dans la mémoire 106.

Un exemple d'une telle cartographie est représenté sur la figure 6. Sur cette figure, l'axe des abscisses représente le jeu estimé $J_{es}$ exprimé en millimètre et l'axe des ordonnées représente la valeur de l'angle correctif $\beta$. L'angle correctif $\beta$ est nul pour un jeu $J_n$ observé quand la température de fonctionnement du moteur est égal à la température $T_n$. En effet, ce jeu a déjà été pris en compte pendant la phase de calibration lors des mesures des angles d'ouverture et de fermeture des soupapes.

De plus, pour remédier au problème d'imprécision sur l'emplacement de l'angle d'ouverture causé par la rampe R, le correcteur 102 est ici apte à soustraire à l'angle $O_m$ un offset constant $O_s$ pour se rapprocher de l'angle d'ouverture réelle de la soupape. Ici, l'offset $O_s$ est choisi pour obtenir un angle d'ouverture sensiblement au milieu de la plage angulaire correspondant à la rampe R. Plus précisément, pendant la phase de calibration, l'angle $O_m$ est mesuré en dehors de la rampe R pour avoir une mesure précise. Par exemple, l'angle $O_m$ correspond à la position angulaire du vilebrequin lorsque la hauteur de levée de la soupape est égale à 1 mm. Ici, on considère que lorsque la hauteur de levée de soupape est égale 1 mm, on se trouve en dehors de la rampe R. Les mesures des positions angulaires pour une hauteur donnée de levée en dehors de la rampe R sont bien plus précises que celles réalisées dans la zone correspondant à la rampe R puisque la dérivée de la loi de levée en dehors de la rampe R est beaucoup plus grande.

Par conséquent, ici, le correcteur 102 obtient les angles d'ouverture de soupape utilisés dans le modèle précédemment décrit à l'aide des relations suivantes :

$$OE = OE_m - OE_s + \beta_{OE},$$

$$OA = OA_m - OA_s + \beta_{OA}$$

où :

- OE et OA sont les angles d'ouverture, respectivement, des soupapes d'échappement et d'admission corrigés pour l'estimation de la quantité d'air frais,

- $OE_m$ et $OA_m$ sont les angles d'ouverture, respectivement, des soupapes d'échappement et d'admission mesurés pendant la phase de calibration en dehors de la rampe R,

- $OE_s$ et $OA_s$ sont les offsets constants permettant de rapprocher les angles d'ouverture de leurs positions réelles, et

- $\beta_{OE}$ et $\beta_{OA}$ sont les angles correctifs calculés à partir des jeux de distribution estimés.

Ici, l'angle de fermeture de la soupape d'échappement ou d'admission utilisé dans le modèle décrit ci-dessus est estimé à partir des relations suivantes :

$$FE = FE_m + FE_s - \beta_{FE},$$

$$FA = FA_m + FA_s - \beta_{FA}$$

où :

- $FE_m$ et $FA_m$ sont les angles de fermeture, respectivement, d'échappement et d'admission mesurés pendant la phase de calibration,

- $FE_s$ et $FA_s$ sont les offsets constants permettant de rapprocher les angles de fermeture de leurs positions réelles, et

- $B_{FE}$ et $\beta_{FA}$ sont les angles correctifs calculés à partir des jeux de distribution estimés.

Les angles $OE_m$ et $FA_m$ peuvent être exprimés en fonction des angles $FE_m$ et $OA_m$ à l'aide des relations suivantes :

$$OE_m = FE_m - L_{LE},$$

$$FA_m = OA_m + L_{LA},$$

où $L_{LE}$ et $L_{LA}$ sont les largeurs des lois de levée, respectivement, des soupapes d'échappement et d'admission.

2- Ces largeurs $L_{LE}$ et $L_{LA}$ sont mesurées pendant la phase de calibration.

Le fonctionnement de l'unité 60 du véhicule 2 va maintenant être décrit plus en détail en regard du procédé de la figure 7.

Initialement, on procède à une phase 120 de calibration du modèle d'estimation de la quantité d'air frais admis dans les cylindres. Pendant la phase 120, les différents paramètres du modèle sont mesurés et réglés. En particulier, les angles $OE_m$, $FE_m$, $OA_m$ et $FA_m$ pour chaque soupape sont mesurés.

Lors de la phase 120, les cartographies permettant d'établir la valeur du jeu estimé $J_{es}$ en fonction de la température du liquide de refroidissement et du temps $t_s$ ainsi que les cartographies permettant d'établir la valeur de l'angle correctif $\beta$ en fonction du jeu estimé $J_{es}$ sont établies.

Lors d'une étape 122, une fois le modèle calibré, les valeurs des différents paramètres sont implémentées dans le code des modules 92 à 102.

Ensuite, lors du fonctionnement du moteur, la masse Ma d'air frais admis dans les cylindres est estimée par l'unité 60.

Plus précisément, lors d'une étape 124, la température du liquide de refroidissement lors du démarrage du moteur et le temps $t_s$ sont mesurés et le l'estimateur 78 estime les jeux $J_{es}$ à partir de ces mesures.

Ensuite, lors d'une étape 126, le correcteur 102 corrige les angles $OE_m$, $FE_m$, $OA_m$ et $FA_m$ mesurés lors de la phase 120 pour obtenir les angles OE, FE, OA et FA utilisés par le modèle d'estimation de la masse Ma.

Ensuite, lors d'une étape 128, les modules 92 à 100 calculent l'estimation de la masse Ma et du remplissage total en utilisant les angles d'ouverture et de fermeture de soupape corrigés lors de l'étape 126 et les mesures réalisées par les capteurs 62, 64.

Lors d'une étape 130, par exemple, la masse Ma estimée et le remplissage total *Rempl_tot* estimé lors de l'étape 128 sont utilisés pour commander l'admission d'air dans les cylindres du moteur du véhicule 2.

De nombreux autres modes de réalisation sont possibles.

Ce qui a été décrit ci-dessus peut également être appliqué à un moteur dépourvu de déphaseur d'arbre à cames à l'admission ou à l'échappement.

3- Enfin, ce qui a été décrit ci-dessus peut également être adapté au cas où il n'existe pas de croisement de soupapes. Dans ce cas, la masse Mb_reasp et la masse Mbal_tot sont nulles, ce qui simplifie les relations précédentes.

Le jeu de distribution des soupapes peut être estimé de façon différente et en particulier à partir de grandeurs physiques mesurées différentes ou avec des grandeurs physiques mesurées supplémentaires. Par exemple, la position de la soupape peut être utilisée pour estimer le jeu de distribution.

D'autres modèles que celui décrit ci-dessus peuvent être utilisés pour estimer la quantité d'air frais admis dans les cylindres. Toutefois, ces modèles sont tous paramétrés avec les angles d'ouverture et de fermeture des soupapes de manière à ce que l'estimateur et le correcteur d'angle d'ouverture et de fermeture puissent être mis en œuvre. La correction des angles d'ouverture et de fermeture peut être mis en œuvre aussi bien pour les soupapes d'admission seulement ou pour les soupapes d'échappement seulement ou pour les deux.

Ce qui a été décrit ci-dessus peut être adapté au cas des moteurs à trois, quatre ou six cylindres ou à d'autres nombres de cylindres.

Ce qui a été décrit ci-dessus peut également être adapté au cas des moteurs suralimentés ou non.

Ce qui a été également décrit ci-dessus peut être appliqué :

- au moteur équipé de déphaseur d'arbre à cames d'admission ou non,

- au moteurs équipé d'un circuit de recirculation des gaz d'échappement plus connu sous l'acronyme de EGR (Exhaust Gas Recirculation), ou

- avec ou sans injection d'air à l'échappement.

**EP 2 567 086 B1**

**Revendications**

1. Procédé d'estimation par un calculateur programmable d'une quantité d'air frais admise à l'intérieur d'une chambre de combustion d'un cylindre d'un moteur lors d'un cycle moteur à partir d'un modèle basé sur des paramètres parmi lesquels les angles d'ouverture et de fermeture des soupapes d'admission et d'échappement ; ces angles d'ouverture et de fermeture étant estimés ou mesurés lors d'une phase de calibration du moteur à une température nominale de fonctionnement du moteur, **caractérisé en ce que** lors du fonctionnement du moteur à une température différente de la température nominale, le modèle d'estimation de la quantité d'air frais admise est modifié par une correction des paramètres d'angles d'ouverture et de fermeture en fonction de l'estimation (124) des jeux de distribution entre les soupapes et leurs culbuteurs à ladite température différente de la température nominale, l'estimation (124) des jeux de distribution étant réalisée à partir d'une grandeur physique représentative de la température du moteur et du temps écoulé depuis le démarrage du moteur.

2. Procédé selon la revendication 1, dans lequel la correction comporte :

   i. la conversion de chaque jeu de distribution estimé en un angle correctif à l'aide d'une cartographie prédéterminée, et
   ii. l'ajout ou la soustraction de l'angle correctif à au moins l'un des angles d'ouverture ou de fermeture réglés lors de la phase de calibration.

3. Procédé selon l'une quelconque des revendications précédentes, dans lequel le procédé comprend une étape d'estimation (128) d'une masse Ma d'air frais admise à l'intérieur de la chambre de combustion du cylindre du moteur lors d'un cycle moteur, cette étape comprenant :

   - l'estimation d'une masse totale Mtot de gaz contenue dans la chambre de combustion à la fin de l'admission de l'air frais,
   - l'estimation d'une masse Mb de gaz brûlés contenue dans la chambre de combustion à la fin de l'échappement des gaz brûlés, et
   - l'estimation de la masse Ma d'air frais à partir de la différence entre la masse totale Mtot et la masse Mb de gaz brûlés estimées.

4. Procédé selon l'une quelconque des revendications précédentes, dans lequel la correction (126) consiste également à ajouter ou à soustraire un offset constant à l'angle d'ouverture ou de fermeture réglé pendant la phase de calibration.

5. Procédé selon l'une des revendications précédentes, dans lequel le procédé comporte la mesure (164) de la température du liquide de refroidissement du moteur au moment du démarrage du moteur, cette mesure constituant la grandeur représentative de la température du moteur.

6. Support (106) d'enregistrement d'informations lisible par ordinateur, **caractérisé en ce qu'**il comporte des instructions qui, lorsque ces instructions sont exécutées par un calculateur électronique, conduisent celui-ci à mettre en œuvre un procédé conforme à l'une quelconque des revendications précédentes.

7. Estimateur (60) d'une quantité d'air frais admise à l'intérieur d'une chambre de combustion d'un cylindre d'un moteur lors d'un cycle moteur, cet estimateur comportant un modèle d'estimation de cette quantité d'air frais, ledit modèle étant basé sur des paramètres parmi lesquels des angles d'ouverture et de fermeture de soupapes d'admission et d'échappement, lesdits angles étant mesurés ou estimés lors d'une phase de calibration pendant laquelle le moteur fonctionne à une température nominale pour être implantés en tant que constantes dans un module de calcul de l'estimateur, **caractérisé en ce que** l'estimateur comporte un correcteur (102) apte à corriger les angles d'ouverture et de fermeture réglés en fonction d'une estimation des jeux de distribution entre les soupapes et leurs culbuteurs lors du fonctionnement du moteur à une température différente de la température nominale, l'estimation (124) des jeux de distribution étant réalisée à partir d'une grandeur physique représentative de la température du moteur et du temps écoulé depuis le démarrage du moteur.

8. Véhicule (2), **caractérisé en ce qu'**il comporte un estimateur conforme à la revendication 7.

**Patentansprüche**

1. Verfahren zum Schätzen einer Frischluftmenge, die während eines Motorzyklus in einen Brennraum eines Motorzylinders eingelassen wird, durch einen programmierbaren Computer anhand eines Modells basierend auf Parameter einschließlich der Öffnungs- und Schließwinkel der Einlass- und Auslassventile ; Diese Öffnungs- und Schließwinkel werden während einer Motorkalibrierungsphase bei einer nominalen Motorbetriebstemperatur geschätzt oder gemessen, was **dadurch gekennzeichnet ist, dass** während des Betriebs des Motors bei einer von der nominalen Temperatur abweichenden Temperatur das Modell Die Schätzung der eingelassenen Frischluftmenge wird durch Korrektur der Öffnungs- und Schließwinkelparameter in Abhängigkeit geändert der Schätzung (124) der Verteilungsabstände zwischen den Ventilen und ihren Kipphebeln bei der von der Nenntemperatur abweichenden Temperatur , wobei die Schätzung (124) der Verteilungsabstände unter Verwendung einer physikalischen Größe durchgeführt wird, die für die Temperatur der Motor und die seit dem Starten des Motors verstrichene Zeit.

2. Verfahren nach Anspruch 1, wobei die Korrektur umfasst:

    i. die Umwandlung jedes geschätzten Verteilungssatzes in einen Korrekturwinkel unter Verwendung einer vorbestimmten Karte und
    ii. das Hinzufügen oder den Winkel zu fixieren zumindest einem der Subtraktion s Winkel des Öffnens oder Schließen Satz während der Kalibrierungsphase.

3. Verfahren nach einem der vorhergehenden Ansprüche, bei dem das Verfahren einen Schritt zum Schätzen (128) einer Masse Ma Frischluft umfasst, die während a in den Brennraum des Motorzylinders eingelassen wird Motorzyklus, dieser Schritt einschließlich :

    - die Schätzung einer Gesamtmasse Mtot des in der Brennkammer enthaltenen Gases am Ende des Frischlufteinlasses,
    - die Schätzung einer Masse Mb verbrannter Gase, die in der Brennkammer am Ende des Abgases der verbrannten Gase enthalten sind, und
    - die Schätzung der Masse Ma der Frischluft aus der Differenz zwischen der Gesamtmasse Mtot und der Masse Mb der verbrannten Gase geschätzt.

4. Verfahren nach einem der vorhergehenden Ansprüche, bei dem die Korrektur (126) auch darin besteht, einen konstanten Versatz zu dem Öffnungs- oder Schließwinkel zu addieren oder zu subtrahieren, der während der Kalibrierungsphase eingestellt wird.

5. Verfahren nach einem der vorhergehenden Ansprüche, bei dem die Schätzung (124) des Verteilungsspiels auf der Grundlage einer physikalischen Größe durchgeführt wird, die für die Temperatur des Motors und die seit dem Starten des Motors verstrichene Zeit repräsentativ ist.

6. Computerlesbares Informationsaufzeichnungsmedium (106), das **dadurch gekennzeichnet ist, dass** es Anweisungen enthält, die, wenn diese Anweisungen von einem elektronischen Computer ausgeführt werden, diesen dazu veranlassen, ein Verfahren gemäß einem zu implementieren einer der vorstehenden Ansprüche.

7. Schätzer (60) einer Frischluftmenge, die während eines Motorzyklus in einen Brennraum eines Motorzylinders eingelassen wird, wobei dieser Schätzer ein Modell zum Schätzen dieser Menge d umfasst Frischluft, wobei das Modell auf Parametern basieren , einschließlich der Winkel des Öffnens und Schließens Einlass- und Auslassventilen, wobei die Winkel während einer Kalibrierungsphase , in der der Motor bei arbeitet gemessen oder geschätzt wird , eine Solltemperatur als Konstanten in dem Abschätzungsmodul implantiert werden, **dadurch gekennzeichnet , dass** der Schätzer einen Korrektor umfasst (102) die Korrektur der Lage der Technik Öffnungs- und Schließwinkel eingestellt auf der Basis von eine Schätzung des Satzes x der Verteilung zwischen den Ventilen und Kipphebel während des Motorbetriebs bei einer Temperatur Differ ente der Solltemperatur, der Schätzwert (124) zur Verteilung von Sätzen Teil eines g wird hergestellt physischer Wanderer, der für die Motortemperatur und die seit dem Starten des Motors verstrichene Zeit repräsentativ ist.

8. Fahrzeug (2), **dadurch gekennzeichnet, dass** es eine Schätzung ur nach Anspruch 7 enthält.

**Claims**

1. Method of estimating by a programmable computer a quantity of fresh air admitted inside a combustion chamber of an engine cylinder during an engine cycle from a model based on parameters including the opening and closing angles of the intake and exhaust valves ; these opening and closing angles being estimated or measured during an engine calibration phase at a nominal engine operating temperature, **characterized in that** during operation of the engine at a temperature different from the nominal temperature, the model estimate of the quantity of fresh air admitted is modified by correcting the opening and closing angle parameters as a function of the estimate (124) of the distribution clearances between the valves and their rocker arms at said temperature different from the nominal temperature , the estimation (124) of the distribution clearances being carried out using a physical quantity representative of the temperature of the engine and the time elapsed since the engine started.

2. Method according to claim 1, in which the correction comprises :

   i. the conversion of each estimated distribution set into a corrective angle using a predetermined map, and
   ii. adding or subtracting the angle to fix at least one of s angles of opening or closing set during the calibration phase.

3. Method according to any one of the preceding claims, in which the method comprises a step of estimating (128) a mass Ma of fresh air admitted inside the combustion chamber of the engine cylinder during a engine cycle, this step including :

   - the estimate of a total mass Mtot of gas contained in the combustion chamber at the end of the intake of fresh air,
   - the estimation of a mass Mb of burnt gases contained in the combustion chamber at the end of the exhaust of the burnt gases, and
   - the estimate of the mass Ma of fresh air from the difference between the total mass Mtot and the mass Mb of burnt gases estimated.

4. Method according to any one of the preceding claims, in which the correction (126) also consists in adding or subtracting a constant offset to the opening or closing angle adjusted during the calibration phase.

5. Method according to any one of the preceding claims, in which the estimation (124) of the distribution clearance is carried out on the basis of a physical quantity representative of the temperature of the engine and the time elapsed since the engine was started.

6. Computer readable information recording medium (106), **characterized in that** it includes instructions which, when these instructions are executed by an electronic computer, lead the latter to implement a method in accordance with one any of the preceding claims.

7. Estimator (60) of a quantity of fresh air admitted inside a combustion chamber of an engine cylinder during an engine cycle, this estimator comprising a model for estimating this quantity d fresh air, said model being based on parameters including opening and closing angles of intake and exhaust valves, said angles being measured or estimated during a calibration phase during which the engine is running a nominal temperature to be installed as constants in an estimator calculation module, **characterized in that** the estimator comprises a corrector (102) capable of correcting the opening and closing angles adjusted as a function of an estimate of the distribution clearance x between the valves and their rocker arms during operation of the engine at a temperature different from the nominal temperature, the estimation (124) of the distribution clearance being carried out from a g physical hiker representative of the engine temperature and the time elapsed since the engine started.

8. Vehicle (2), **characterized in that** it includes an estimate ur in accordance with claim 7.

EP 2 567 086 B1

**Fig.7**

```
120
 ↓
122
 ↓
124
 ↓
126
 ↓
128
 ↓
130
```

**Fig.2**

**Fig.1**

Fig.3

Fig.4

Fig.5

Fig.6

**EP 2 567 086 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4217866 A
- EP 2037107 A